# EUROPÄISCHE PATENTANMELDUNG

(11) **EP 2 666 886 A1**
(43) Veröffentlichungstag der Anmeldung: **27.11.2013**
(21) Anmeldenummer: 12168998.8
(22) Anmeldetag: 23.05.2012
(51) Int. Cl.: C23F 13/04, C23F 13/22, G01N 17/02, F16L 58/00

(54) **Korrosionsschutzvorrichtung**

(71) Anmelder: Weilekes Elektronik GmbH, 45886 Gelsenkirchen (DE)
(72) Erfinder: Weilekes, Thorsten, 75223 Niefern-Öschelbronn (DE)
(74) Vertreter: Ruckh, Rainer Gerhard

(57) **Zusammenfassung**

Die erfindungsgemäße Korrosionsschutzvorrichtung (1) dient zum Schutz einer ein flüssiges oder gasförmiges Medium führenden Rohrleitung (2) und umfasst eine elektrische Spannung generierende Spannungsquelle (3), sowie eine Regeleinheit (4) mittels derer eine geregelte Spannung oder ein geregelter Strom generiert und der Rohrleitung (2) zugeführt wird. Zur Erfassung von Korrosionsschutzparametem ist eine Überwachungseinheit (5) vorgesehen, wobei die Regeleinheit (4) ein mittels einer Pulsweitenmodulation angesteuertes elektronisches Relais (7) aufweist.

## Beschreibung

Die Erfindung betrifft eine Korrosionsschutzvorrichtung gemäß dem Oberbegriff des Anspruchs 1.

Mit derartigen Korrosionsschutzvorrichtungen erfolgt allgemein ein kathodischer Korrosionsschutz für Rohrleitungen, in welchen gasförmige oder flüssige Medien geführt werden. Beispiele für derartige Rohrleitungen sind Gas-, Öl-oder Wasserpipelines, die insbesondere unterirdisch oder unterseeisch verlegt werden. Das Funktionsprinzip des kathodischen Korrosionsschutzes besteht darin, dass an vorgegebenen Stellen der Rohrleitungen eine Spannung beziehungsweise ein Strom angelegt wird, um dadurch elektrochemische Reaktionen, die das vorzugsweise metallische Material der Rohrleitungen angreifen könnten, zu vermeiden.

Bekannte Korrosionsschutzvorrichtungen dieser Art weisen als Spannungsquelle Gleichrichtersysteme mit zugeordneten Regeleinheiten in Form von Strom- oder Spannungsregelungen auf, so dass als Ausgangsgrößen geregelte Spannungen oder Ströme generiert werden, die der Rohrleitung zugeführt werden.

Um eine fortlaufende Kontrolle der auf die Rohrleitung eingespeisten Spannungen und Ströme zu gewährleisten, ist es bekannt, Überwachungseinheiten einzusetzen, die vorzugsweise als drahtlos arbeitende Fernüberwachungseinheiten ausgebildet sind. Derartige Überwachungseinheiten sind typischerweise jeweils an der Spannungsquelle und der Rohrleitung eingebaut und melden in vorgegebenen Zeitabständen an entfernt liegende Überwachungszentralen, ob die in die Rohrleitung eingespeisten Ströme oder Spannungen vorgegebenen Sollwerten entsprechen. Die Datenübertragung erfolgt beispielsweise über Funksignale.

Mit bekannten Gleichrichtersystemen sind nur grobe Regelungen für relativ hohe Ströme im Ampere-Bereich möglich. Dies stellt insbesondere ein Problem für Rohrleitungen neuerer Bauart dar. Derartige Rohrleitungen sind werkseitig bereits mit guten Isolierungen versehen. Dies führt dazu, dass für einen kathodischen Korrosionsschutz derartige Rohrleitungen nur noch Ströme im Milli-Ampere-Bereich bei Spannungen von wenigen Volt benötigt werden, das heißt es sind noch sehr geringe elektrische Leistungen erforderlich.

Der Erfindung liegt die Aufgabe zugrunde, eine Korrosionsschutzvorrichtung der eingangs genannten Art bereitzustellen, welche bei geringem konstruktivem Aufwand eine hohe Funktionalität und Zuverlässigkeit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die erfindungsgemäße Korrosionsschutzvorrichtung dient für eine ein flüssiges oder gasförmiges Medium führende Rohrleitung und umfasst eine elektrische Spannung generierende Spannungsquelle, sowie eine Regeleinheit, mittels derer eine geregelte Spannung oder ein geregelter Strom generiert und der Rohrleitung zugeführt wird. Eine Überwachungseinheit ist zur Erfassung von Korrosionsschutzparameter vorgesehen, wobei die Regeleinheit ein mittels einer Pulsweitenmodulation angesteuertes elektronisches Relais aufweist.

Mit der erfindungsgemäßen Regeleinheit können sehr schnelle Regelungsvorgänge durchgeführt werden, wobei besonders vorteilhaft ist, dass mit der Regeleinheit Regelungen innerhalb eines großen Spannungsbereichs beziehungsweise Strombereichs durchgeführt werden können. Dies beruht darauf, dass als wesentliche Komponente ein elektronisches Relais eingesetzt wird. Im Gegensatz zu üblicherweise eingesetzten elektromechanischen Relais weisen elektronische Relais keine trägheitsbehafteten mechanischen Schaltelemente auf. Damit können mit dem elektronischen Relais sehr schnell, vorzugsweise im Millisekundenbereich liegende Schaltvorgänge durchgeführt werden, so dass dementsprechend schnelle Regelungsvorgänge durchgeführt werden können und zwar innerhalb eines großen Spannungs- und Strombereichs. Zudem sind derartige elektronische Relais im Gegensatz zu elektromechanischen Relais nicht verschleißanfällig.

Mit der erfindungsgemäßen Regeleinheit werden schnelle und präzise Regelungsvorgänge insbesondere auch dadurch ermöglicht, dass das elektronische Relais durch eine Pulsweitenmodulation angesteuert wird. Mit dieser Pulsweitenmodulation werden in schneller zeitlicher Folge Ein- und Ausschaltvorgänge des elektronischen Relais erhalten. Durch die Vorgabe einer bestimmten Pulsweite bei der Pulsweitenmodulation kann eine einzuregelnde Spannung oder ein einzuregelnder Strom sehr schnell und präzise auf einen Sollwert eingeregelt werden. Dabei ist insbesondere vorteilhaft, dass mit der Regeleinheit wahlweise eine der Rohrleitung zuzuführende Spannung oder auch ein der Rohrleitung zuzuführender Strom, der sich aus dem Widerstand der Zuleitung zur Rohrleitung und dem jeweiligen Spannungswert ergibt, eingeregelt werden kann.

Dies wird insbesondere auch durch die erfindungsgemäße Verwendung des elektronischen Relais erreicht, welches vorteilhaft Leistungshalbleiter wie zum Beispiel MOSFET-Transistoren als Schaltelemente aufweist.

Damit kann die erfindungsgemäße Korrosionsschutzvorrichtung für ein breites Spektrum von zu schützenden Rohrleitungen eingesetzt werden. Insbesondere kann die erfindungsgemäße Korrosionsschutzvorrichtung zum kathodischen Korrosionsschutz von älteren, schlecht isolierten Rohrleitungen eingesetzt werden, welchen Ströme im Bereich von einem oder mehreren Ampere bis zu hundert Ampere zugeführt werden müssen. Ebenso kann die erfindungsgemäße Korrosionsschutzvorrichtung zum kathodischen Korrosionsschutz von neueren, gut isolierten Rohrleitungen eingesetzt werden, welchen nur Ströme im Milli-Ampere-Bereich zugeführt werden müssen.

Die Spannungsquelle und die Regeleinheit bilden generell eine Funktionseinheit, wobei diese bevorzugt unmittelbar räumlich zugeordnet sind. Die funktionale Zuordnung ist dabei derart, dass eine mit der Spannungsquelle bereitgestellte Spannung für Regelungsvorgänge genutzt wird. Die Spannungsquelle selbst muss keine Steuer- und Regelfunktionen ausführen und kann daher konstruktiv sehr einfach ausgeführt sein. Beispielsweise ist die Spannungsquelle von einem einfachen Steckernetzteil gebildet.

Alternativ ist die Spannungsquelle von einer Batterie oder einem Akkumulator gebildet.

Gemäß einer besonders vorteilhaften Ausgestaltung der Erfindung ist die Regeleinheit in der Spannungseinheit integriert oder bildet mit dieser eine Baueinheit.

Auch in diesem Fall können hierfür die sogenannten Spannungsquellen eingesetzt werden. Besonders vorteilhaft ist die Spannungsquelle von einem Gleichrichter gebildet.

Mit der vorzugsweise dort integrierten Regeleinheit wird ein Gleichrichter erhalten, dessen Funktionalität gegenüber bekannten Gleichrichtersystemen wesentlich erhöht ist.

Gemäß einer vorteilhaften Ausführungsform der Erfindung ist zur Erfassung von Korrosionsschutzparametern eine Überwachungseinheit vorgesehen.

Diese Überwachungseinheit bildet eine von der Spannungsquelle und der Regeleinheit separate Einheit, wobei die Überwachungseinheit zwischen der Regeleinheit und der Spannungsquelle einerseits und der Kathode andererseits angeordnet ist.

Als wesentliche Korrosionsschutzparameter werden mit der Überwachungseinheit die Spannung und/oder der Strom, die über die Kathode der Rohrleitung zugeführt werden, überwacht.

Mit dieser Überwachungsfunktion wird damit auch die Funktion der Regeleinheit überwacht, da über die Spannungs- und Stromüberwachung auch die mit der Regeleinheit zu regelnden Größen überwacht werden.

Besonders vorteilhaft werden in der Überwachungseinheit durch Ein- beziehungsweise Ausschalten von Schaltelementen Ein- und Ausschaltpotentiale als Korrosionsschutzparameter erfasst.

Die erfindungsgemäße Korrosionsschutzvorrichtung umfasst generell eine Mehrfachanordnung von Spannungsquellen und weist zugeordnete Überwachungseinheiten auf, wobei die einzelnen Überwachungseinheiten Fernüberwachungseinheiten bilden, die berührungslos Überwachungsdaten an eine zentrale Einheit übermitteln.

Ein weiterer wesentlicher Vorteil der erfindungsgemäßen Korrosionsschutzvorrichtung besteht darin, dass in das erfindungsgemäße Regelsystem weitere Informationen, die von Sensoren oder dergleichen generiert werden mit einbezogen werden können. Die Sensoren bilden ebenso wie die Regeleinheiten dezentrale Einheiten. Da Informationen von dezentralen Sensoren in den Regeleinheiten vor Ort ausgewertet werden können entfallen aufwändige Transfermechanismen derartiger Informationen zu Zentraleinheiten. Zudem wird durch die dezentrale Informationsverarbeitung eine rationellere, schnellere Datenauswertung erhalten.

Die Erfindung wird im Folgenden anhand der Zeichnungen erläutert. Es zeigen:
- Figur 1:: Schematische Darstellung eines ersten Ausführungsbeispiels der erfindungsgemäßen Korrosionsschutzvorrichtung.
- Figur 2:: Schematische Darstellung eines zweiten Ausführungsbeispiels der erfindungsgemäßen Korrosionsschutzvorrichtung.

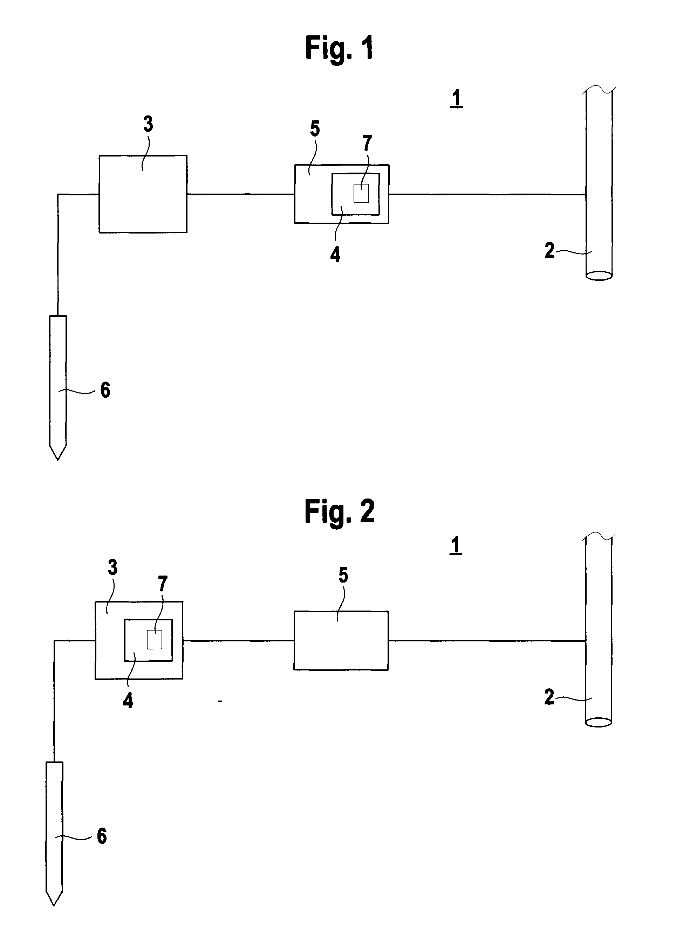

Figur 1 zeigt ein erstes Ausführungsbeispiel einer Korrosionsschutzvorrichtung 1, mittels derer ein kathodischer Korrosionsschutz für eine Rohrleitung 2 bereitgestellt wird, in welcher ein gasförmiges oder flüssiges Medium geführt wird. Die Rohrleitung 2 kann beispielsweise von einer unterirdisch oder unterseeisch verlegten Gas-, Öl- oder Wasserpipeline gebildet sein.

Als Bestandteil der Korrosionsschutzvorrichtung 1 sind in Figur 1 eine Spannungsquelle 3 und eine dieser nachgeordnete und elektrisch mit dieser verbundene Regeleinheit 4 vorgesehen. Weiterhin umfasst die Korrosionsschutzvorrichtung 1 eine Überwachungseinheit 5. Figur 1 zeigt weiterhin eine Anode 6. Bei einer solchen Anode 6 handelt es sich typisch um eine Eisen-Silizim-Anode in einer niederohmigen Koksbettung, die in dem die Rohrleitung 2 umgebenden Erdreich angeordnet ist. Diese oder mehrere Anoden sind, ebenso wie die Rohrleitung 2, die die Kathodenseite der Anordnung bildet, an die Korrosionsschutzvorrichtung 1 angeschlossen. Die Spannungsquelle 3 generiert eine Spannung, die der Regeleinheit 4 zugeführt wird. Die Spannungsquelle 3 kann beispielsweise von einem einfachen Steckernetzteil gebildet sein. Weiterhin kann die Spannungsquelle 3 auch von einer Batterie, einem Akkumulator oder auch von einem Gleichrichter gebildet sein. In der Regeleinheit 4 wird eine Spannungs- oder Stromregelung durchgeführt, so dass eine geregelte Spannung oder ein geregelter Strom für die Rohrleitung 2 erzeugt wird. Der dadurch auf der Rohrleitung 2 fließende kathodische Schutzstrom verhindert elektrochemische Reaktionen, die das metallische Material der Rohrleitung 2 angreifen könnten. Mit der Regeleinheit 4 und der Überwachungseinheit 5 werden fortlaufend zu Überwachungs- und Kontrollzwecken Korrosionsschutzparameter ermittelt, zu welchen insbesondere die mit der Regeleinheit 4 generierte geregelte Spannung beziehungsweise der mit der Regeleinheit 4 geregelte Strom gehören.

In Figur 1 ist nur eine Einheit, bestehend aus einer Spannungsquelle 3, einer Regeleinheit 4 und einer Überwachungseinheit 5 dargestellt. Allgemein umfasst die Korrosionsschutzvorrichtung 1 mehrere derartige, vorzugsweise identisch ausgebildete Einheiten um an mehreren, vorgegebenen Stellen der Rohrleitung 2 einen kathodischen Schutzstrom einzuspeisen.

Die Regeleinheit 4 umfasst eine Rechnereinheit sowie ein elektronisches Relais 7. Das elektronische Relais 7 weist ein oder mehrere aus Halbleiterelementen bestehende Schaltelemente auf. Die Halbleiterelemente sind von Leistungshalbleitern wie MOSFET-Transistoren gebildet.

Zur Durchführung von Regelvorgängen wird eine Pulsweitenmodulation verwendet. Mit dieser Pulsenweitenmodulation können zeitlich schnell variierende Ein- und Ausschaltzeiten des elektronischen Relais 7 vorgegeben werden. Durch diese Pulsweitenmodulation kann mit der Spannung der Spannungsquelle 3 als Eingangsgröße die von der Regeleinheit 4 ausgegebene Spannung schnell und präzise auf einen in der Regeleinheit 4 vorgegebenen Sollwert eingeregelt werden. Durch die von der Regeleinheit 4 ausgegebenen geregelten Spannung und dem elektrischen Widerstand der Zuleitung von der Regeleinheit 4 zur Rohrleitung 2 ergibt sich dann ein kathodischer Schutzstrom, der auf die Rohrleitung 2 geführt wird. Je nach Vorgabe der Sollwerte kann in der Regeleinheit 4 sowohl eine Spannungsregelung als auch eine Stromregelung durchgeführt werden.

Mit der in der Regeleinheit 4 durchgeführten Regelung kann ein großer Strom-und Spannungsbereich abgedeckt werden. So können insbesondere an die Ausbildung der Rohrleitung 2 angepasste Werte des kathodischen Schutzstroms eingeregelt werden. Dieser kathodische Schutzstrom kann je nach Ausbildung der Rohrleitung 2 im Ampere-Bereich oder im Milli-Ampere-Bereich liegen. Weiter sind sogar Ströme von bis zu hundert Ampere möglich.

Mit der oder den Überwachungseinheiten 5 der Korrosionsschutzvorrichtung 1 erfolgt eine regelmäßige, fortlaufende Kontrolle und Überwachung aller wesentlichen Korrosionsschutzparameter der Korrosionsschutzvorrichtung 1, insbesondere der Spannungen und Ströme, mit denen die Rohrleitung 2 beaufschlagt wird.

Die Überwachungseinheiten 5 bilden dabei Fernüberwachungseinheiten, die ihre Kontrollsignale berührungslos, vorzugsweise mittels Funksignalen, an entfernt liegende zentrale Einheiten übermitteln. Weiterhin ist auch eine Fernprogrammierung, das heißt Parametrierung der Überwachungseinheit 5 möglich, beispielsweise über Mobiltelefone. Mit dieser Parametrierung kann der Funktionsumfang der mit den Überwachungseinheiten 5 durchgeführten Kontrollfunktionen vorgegeben werden. Generell ist auch eine drahtgebundene Datenübertragung, beispielsweise über Ethernet, möglich.

Der Funktionsumfang der Überwachungseinheit 5 umfasst die Erfassung aller wesentlichen Korrosionsschutzparameter zum Betrieb der Korrosionsschutzvorrichtungen 1. Neben einer direkten Erfassung der von der Regeleinheit 4 ausgegebenen Spannungen und Ströme werden in der Überwachungseinheit 5 als weitere Kontrollgrößen sogenannte Ein- und Ausschaltpotentiale ermittelt. Hierzu sind in der Überwachungseinheit 5 entsprechende Schaltelemente vorgesehen, mittels derer ein Ein- und Ausschalten der auf die Rohrleitung 2 ausgegebenen Spannung erfolgt. Bei einem Einschalten wird das Einschaltpotential auf der Leitung zur Rohrleitung 2 ermittelt. Bei einem Ausschalten wird entsprechend das Ausschaltpotential ermittelt.

Weiterhin werden als Korrosionsschutzvorrichtungen 1 auch Kontrollgrößen der Überwachungseinheit 5 selbst ermittelt. Hierzu gehören Daten über den Zustand von Funkübertragungsmitteln zum Senden und Empfangen von Funksignalen, Daten über externe Einflüsse wie der Umgebungs-Temperatur, sowie Daten über den Sendezustand einer in einer Überwachungseinheit 5 integrierten Spannungsversorgung wie zum Beispiel einer Batterie. Schließlich können als Korrosionsschutzparameter Daten über den Synchronitätszustand der einzelnen Überwachungseinheiten 5 ermittelt werden. Vorzugweise werden nämlich die einzelnen Überwachungseinheiten 5 synchron betrieben um zu gleichen Zeiten vorgegebene Kontrollsignale zu generieren.

Die einzelnen Überwachungseinheiten 5 bilden somit ein Datenlogger-System, anhand dessen Kontrollgrößen die Korrosionsschutzvorrichtung 1 komplett überwacht werden kann.

Figur 2 zeigt ein zweites Ausführungsbeispiel der erfindungsgemäßen Korrosionsschutzvorrichtung 1. Dies unterscheidet sich von der Ausführungsform gemäß Figur 1 dadurch, dass die Regeleinheit 4 in der Spannungsquelle 3 integriert ist. Alternativ können die Spannungsquelle 3 und die Regeleinheit 4 eine Baueinheit bilden. Vorteilhaft ist die Spannungsquelle 3 von einem Gleichrichter gebildet, in dem die erfindungsgemäße Regeleinheit 4 integriert ist. Die Funktion der Korrosionsschutzvorrichtung 1 gemäß Figur 2 entspricht jener der Korrosionsschutzvorrichtung 1 gemäß Figur 1.
Weilekes Elektronik GmbH
45886 Gelsenkirchen

### Bezugszeichenliste

- (1): Korrosionsschutzvorrichtung
- (2): Rohrleitung
- (3): Spannungsquelle
- (4): Regeleinheit
- (5): Überwachungseinheit
- (6): Anode
- (7): elektronisches Relais

## Patentansprüche

1. Korrosionsschutzvorrichtung (1) für eine ein flüssiges oder gasförmiges Medium führende Rohrleitung (2), mit einer eine elektrische Spannung generierenden Spannungsquelle (3) und einer Regeleinheit (4) mittels derer eine geregelte Spannung oder ein geregelter Strom generiert und der Rohrleitung (2) zugeführt wird, **dadurch gekennzeichnet, dass** die Regeleinheit (4) ein mittels einer Pulsweitenmodulation angesteuertes elektronisches Relais (7) aufweist.

2. Korrosionsschutzvorrichtung nach Anspruch 1, **dadurch gekennzeichnet, dass** das elektronische Relais (7) aus Halbleitern bestehende Schaltelemente aufweist.

3. Korrosionsschutzvorrichtung nach einem der Ansprüche 1 oder 2, **dadurch gekennzeichnet, dass** mittels der Pulsweitenmodulation Ein- und Ausschaltzeiten des elektronischen Relais (7) vorgegeben werden.

4. Korrosionsschutzvorrichtung nach einem der Ansprüche 1 bis 3, **dadurch gekennzeichnet, dass** die Regeleinheit (4) und die Spannungseinheit eine Funktionseinheit bilden.

5. Korrosionsschutzvorrichtung nach einem der Ansprüche 1 bis 4, **dadurch gekennzeichnet, dass** die Regeleinheit (4) in der Spannungseinheit integriert ist oder mit dieser eine Baueinheit bildet.

6. Korrosionsschutzvorrichtung nach einem der Ansprüche 1 bis 5, **dadurch gekennzeichnet, dass** die Spannungsquelle (3) von einem Netzteil gebildet ist.

7. Korrosionsschutzvorrichtung nach einem der Ansprüche 1 bis 6, **dadurch gekennzeichnet, dass** die Spannungsquelle (3) von einer Batterie oder einem Akkumulator gebildet ist.

8. Korrosionsschutzvorrichtung nach einem der Ansprüche 1 bis 5, **dadurch gekennzeichnet, dass** die Spannungsquelle (3) von einem Gleichrichter gebildet ist.

9. Korrosionsschutzvorrichtung nach einem der Ansprüche 1 bis 8, **dadurch gekennzeichnet, dass** zur Erfassung von Korrosionsschutzparametern eine Überwachungseinheit (5) vorgesehen ist.

10. Korrosionsschutzvorrichtung nach Anspruch 9, **dadurch gekennzeichnet, dass** die Überwachungseinheit (5) zwischen der Regeleinheit (4) und der Spannungsquelle (3) einerseits und der Rohrleitung (2) andererseits angeordnet ist.

11. Korrosionsschutzvorrichtung nach einem der Ansprüche 1 bis 10, **dadurch gekennzeichnet, dass** mit der Überwachungseinheit (5) die Spannung und/oder der Strom, die der Rohrleitung (2) zugeführt werden, überwacht werden.

12. Korrosionsschutzvorrichtung nach einem der Ansprüche 1 bis 11, **dadurch gekennzeichnet, dass** mit der Überwachungseinheit (5) eine Überwachung von mit der Regeleinheit (4) zu regelnden Größen erfolgt.

13. Korrosionsschutzvorrichtung nach einem der Ansprüche 1 bis 12, **dadurch gekennzeichnet, dass** in der Überwachungseinheit (5) durch Einbeziehungsweise Ausschalten von Schaltelementen Ein- und Ausschaltpotentiale als Korrosionsschutzparameter erfasst werden.

14. Korrosionsschutzvorrichtung nach einem der Ansprüche 1 bis 13, **dadurch gekennzeichnet, dass** die Überwachungseinheit (5) eine Fernüberwachungseinheit bildet.

15. Korrosionsschutzvorrichtung nach einem der Ansprüche 1 bis 14, **dadurch gekennzeichnet, dass** diese eine Mehrfachanordnung von Spannungsquellen (3) und zugeordneten Überwachungseinheiten (5) aufweist.
